# EUROPÄISCHE PATENTSCHRIFT

(11) **EP 2 651 708 B1**
(45) Veröffentlichungstag und Bekanntmachung des Hinweises auf die Patenterteilung: **25.09.2019**
(21) Anmeldenummer: 11779424.8
(22) Anmeldetag: 08.11.2011
(51) Int. Cl.: B60S 1/38

(54) **WISCHBLATTVORRICHTUNG**
WIPER BLADE DEVICE
SYSTÈME DE BALAI D'ESSUIE-GLACE

(30) Priorität: 13.12.2010 DE 102010062896
(43) Veröffentlichungstag der Anmeldung: 23.10.2013
(73) Patentinhaber: Robert Bosch GmbH, 70442 Stuttgart (DE)
(72) Erfinder: HERINCKX, Dirk, B-3350 Linter (BE); BEX, Koen, B-3890 Jeuk (BE); DEPONDT, Helmut, B-3010 Kessel-Lo (BE)
(86) Internationale Anmeldenummer: PCT/EP2011/069624
(87) Internationale Veröffentlichungsnummer: WO 2012/079852

(56) Entgegenhaltungen:
- EP-A1- 2 008 890
- EP-A1- 2 008 891
- FR-A1- 2 589 409
- FR-A1- 2 871 127
- FR-A1- 2 890 026
- FR-A1- 2 911 834
- FR-A1- 2 925 437
- US-A1- 2006 207 050

## Beschreibung

### Stand der Technik

Die Erfindung geht aus von einer Wischblattvorrichtung nach dem Oberbegriff des Patentanspruchs 1.

Es ist bereits eine Wischblattvorrichtung mit einer Wischleisteneinheit bekannt, die ein Windabweiserelement, eine Wischlippe und ein Wischleistenelement aufweist, das einen Längsführungskanal für ein Trägerelement umfasst FR-A-2911834 offenbart den Oberbegriff des Anspruchs 1.

### Offenbarung der Erfindung

Die Erfindung geht aus von einer Wischblattvorrichtung mit einer Wischleisteneinheit, die ein Windabweiserelement, eine Wischlippe und ein Wischleistenelement aufweist, das einen Längsführungskanal für ein Trägerelement umfasst.

Es wird vorgeschlagen, dass das Wischleistenelement in einem montierten Zustand einen Formschluss mit der Wischlippe bildet, wodurch eine besonders schnelle Montage der Wischblattvorrichtung erreicht werden kann. Unter einer "Wischleisteneinheit" soll dabei in diesem Zusammenhang insbesondere eine Einheit verstanden werden, die dazu vorgesehen ist, einen Wischblattadapter mit einer Wischlippe zu verbinden. Unter "vorgesehen" soll insbesondere speziell ausgelegt und/oder ausgestattet verstanden werden. Unter einem "Wischblattadapter" soll in diesem Zusammenhang insbesondere ein Adapter verstanden werden, der dazu vorgesehen ist, einen Kopplungsbereich der Wischblattvorrichtung für eine Kopplung mit einem Wischarm bereitzustellen. Unter einem "Windabweiserelement" soll in diesem Zusammenhang insbesondere ein Element verstanden werden, das dazu vorgesehen ist, einen auf die Wischblattvorrichtung wirkenden Fahrtwind abzuweisen und/oder für ein Anpressen der Wischlippe auf eine Fahrzeugscheibe zu nutzen. Bevorzugt weist das Windabweiserelement zumindest eine konkave Fläche auf. Unter einem "Längsführungskanal" soll in diesem Zusammenhang insbesondere ein Führungskanal verstanden werden, der sich in montiertem Zustand in einer Haupterstreckungsrichtung parallel zu einer Längsrichtung der Wischleisteneinheit erstreckt. Unter einer "Längsrichtung" soll in diesem Zusammenhang insbesondere eine Richtung verstanden werden, die sich im Wesentlichen parallel zu einer Längserstreckung des Trägerelements erstreckt. Unter einer "Längserstreckung" soll in diesem Zusammenhang insbesondere eine größtmögliche Erstreckung verstanden werden. Unter "im Wesentlichen" soll in diesem Zusammenhang insbesondere eine Abweichung von weniger als 10°, bevorzugt weniger als 5° verstanden werden. Unter einer "Erstreckung" eines Elements soll in diesem Zusammenhang insbesondere ein maximaler Abstand zweier Punkte einer senkrechten Projektion des Elements auf eine Ebene verstanden werden. Unter einem "Trägerelement" soll in diesem Zusammenhang insbesondere ein federelastisches Element verstanden werden, das zumindest eine Erstreckung aufweist, die in einem normalen Betriebszustand um zumindest 10%, insbesondere um wenigstens 20%, vorzugsweise um mindestens 30% und besonders vorteilhaft um zumindest 50% elastisch veränderbar ist, und das insbesondere eine von einer Veränderung der Erstreckung abhängige und vorzugsweise zu der Veränderung proportionale Gegenkraft erzeugt, die der Veränderung entgegenwirkt.

In einer weiteren Ausgestaltung der Erfindung wird vorgeschlagen, dass das Wischleistenelement einstückig mit dem Windabweiserelement ausgebildet ist, wodurch eine besonders haltbare Verbindung zwischen Wischleistenelement und Windabweiserelement hergestellt werden kann. Unter "einstückig" soll insbesondere stoffschlüssig verbunden, wie beispielsweise durch einen Schweißprozess und/oder Klebeprozess usw., und besonders vorteilhaft angeformt verstanden werden, wie durch die Herstellung aus einem Guss und/oder durch die Herstellung in einem Ein- oder Mehrkomponentenspritzverfahren.

Umfasst die Wischleisteneinheit ein federelastisches Trägerelement, das in einem montierten Zustand einen Formschluss mit dem Wischleistenelement bildet, kann das Trägerelement sicher in der Wischleisteneinheit gehalten werden.

Weist die Wischblattvorrichtung einen Wischblattadapter auf, der in einem montierten Zustand einen Formschluss mit der Wischleisteneinheit bildet, kann eine besonders einfache und sichere Kopplung mit einem weiteren Bauteil, wie einem Wischerarm hergestellt werden.

Ferner wird vorgeschlagen, dass der Wischblattadapter eine Längsführungseinheit aufweist, die dazu vorgesehen ist, das Trägerelement formschlüssig aufzunehmen. wodurch eine besonders sichere Aufnahme des Trägerelements erzielt werden kann. Unter einer "Längsführungseinheit" soll in diesem Zusammenhang insbesondere eine Einheit verstanden werden, die dazu vorgesehen ist, eine Führung eines Trägerelements in Längsrichtung bereitzustellen. Bevorzugt weist die Längsführungseinheit zumindest eine sich in Längsrichtung erstreckende Führungsnut auf, die dazu vorgesehen ist, einen Formschluss mit der Trägereinheit zu bilden.

Sind der Längsführungskanal und die Wischlippenführungseinheit in einem montierten Zustand in zumindest einem Endbereich stoffschlüssig verschlossen, kann eine Bewegung des Trägerelements in Längsrichtung relativ zum Wischleistenelement besonders sicher vermieden werden.

In einer weiteren Ausgestaltung der Erfindung wird vorgeschlagen, dass das Wischleistenelement und das Windabweiserelement in einem Coextrusions-Verfahren hergestellt sind, wodurch eine besonders stabile und kostengünstige Herstellung erzielt werden kann.

Werden die Wischlippe und das Wischleistenelement formschlüssig verbunden, kann eine besonders schnelle Montage der Wischblattvorrichtung erfolgen.

Eine Montage der Wischblattvorrichtung kann weiter beschleunigt werden, wenn nachdem die Wischlippe und das Wischleistenelement formschlüssig verbunden sind, ein Trägerelement in das Wischleistenelement eingeschoben wird und einen Formschluss mit einem Wischblattadapter bildet.

Besonders stabil kann die Wischblattvorrichtung ausgeführt werden, wenn nach dem Einschieben des Trägerelements in das Wischleistenelement, der Längsführungskanal in zumindest einem Endbereich stoffschlüssig verschlossen ist.

### Zeichnung

Weitere Vorteile ergeben sich aus der folgenden Zeichnungsbeschreibung. In der Zeichnung ist ein Ausführungsbeispiel der Erfindung dargestellt. Die Zeichnung, die Beschreibung und die Ansprüche enthalten zahlreiche Merkmale in Kombination. Dei Fachmann wird die Merkmale zweckmäßigerweise auch einzeln betrachten und zu sinnvollen weiteren Kombinationen zusammenfassen.

Es zeigen:
- Fig. 1: eine perspektivische Ansicht einer erfindungsgemäßen Wischblattvorrichtung in einem montierten Zustand,
- Fig. 2: eine perspektivische Ansicht eines Wischblattadapters der Wischblattvorrichtung nach Figur 1,
- Fig. 3: eine perspektivische Ansicht einer Wischleisteneinheit der Wischblattvorrichtung nach Figur 1,
- Fig. 4: eine perspektivische Ansicht eines Wischblattadapteraufnahmebereichs der Wischleisteneinheit nach Figur 3,
- Fig. 5: eine Schnittdarstellung durch die Wischleisteneinheit nach Figur 3,
- Fig. 6: eine perspektivische Ansicht eines Trägerelements der Wischleisteneinheit nach Figur 3,
- Fig. 7: eine perspektivische Ansicht der Wischblattvorrichtung nach Figur 1 in einem ersten Montageschritt,
- Fig. 8: eine perspektivische Ansicht der Wischblattvorrichtung nach Figur 1 in einem zweiten Montageschritt,
- Fig. 9: eine perspektivische Ansicht der Wischblattvorrichtung nach Figur 1 in einem dritten Montageschritt und
- Fig. 10: eine perspektivische Ansicht der Wischblattvorrichtung nach Figur 1 in einem vierten Montageschritt.

### Beschreibung des Ausführungsbeispiels

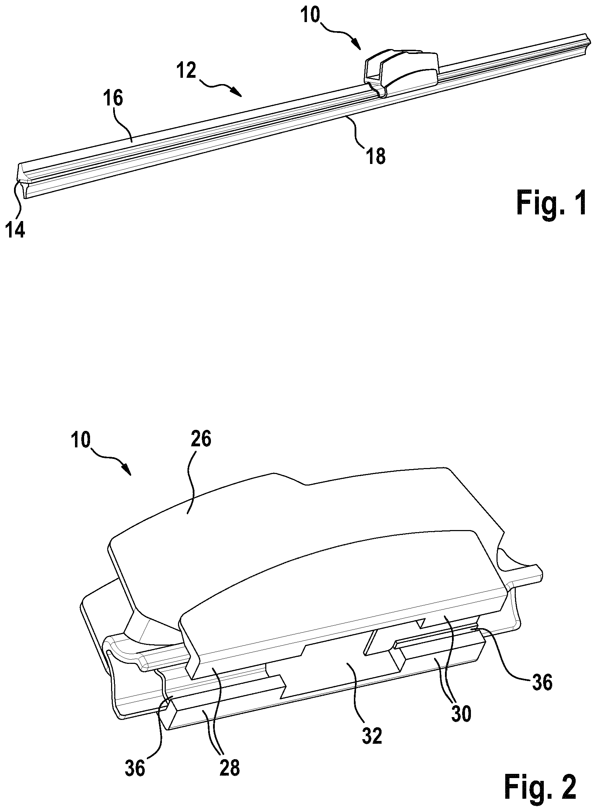

Figur 1 zeigt eine perspektivische Ansicht einer erfindungsgemäßen Wischblattvorrichtung mit einer Wischleisteneinheit 12, die ein Windabweiserelement 16, eine Wischlippe 18 und ein Wischleistenelement 14 aufweist. Das Wischleistenelement 14 und das Windabweiserelement 16 sind in einem Coextrusions-Verfahren hergestellt und einstückig ausgebildet. In diesem Zusammenhang sind auch andere, dem Fachmann als sinnvoll erscheinende Fertigungsverfahren denkbar, wie insbesondere andere Spritzgussverfahren, Klebeverfahren und/oder Schweißverfahren, die zumindest zu einer stoffschlüssigen Verbindung zwischen dem Wischleistenelement 14 und dem Windabweiserelement 16 führen. An der Wischleisteneinheit 12 ist ein Wischblattadapter 10 befestigt.

Figur 2 zeigt eine perspektivische Ansicht des Wischblattadapters 10, der einen Grundkörper 26 aufweist, an dem zwei Befestigungsmittel 28, 30 angeformt sind. Die Befestigungsmittel 28, 30 grenzen an eine Zentralausnehmung 32 des Grundkörpers 26 an.

Der Wischblattadapter 10 beinhaltet eine Längsführungseinheit 34, welche vier Führungsnuten 36 umfasst. Die Führungsnuten 36 sind zueinander hin geöffnet und erstrecken sich parallel zu einer Hauptlängserstreckung des Wischblattadapters 10. Die Hauptlängserstreckung des Wischblattadapters 10 verläuft in einem montierten Zustand parallel zu einer Längsrichtung 22 der Wischleisteneinheit 12. Die Längsrichtung 22 erstreckt sich parallel zu einer Längserstreckung der Wischleisteneinheit 12. Ferner grenzen die Führungsnuten 36 an die Zentralausnehmung 32 an.

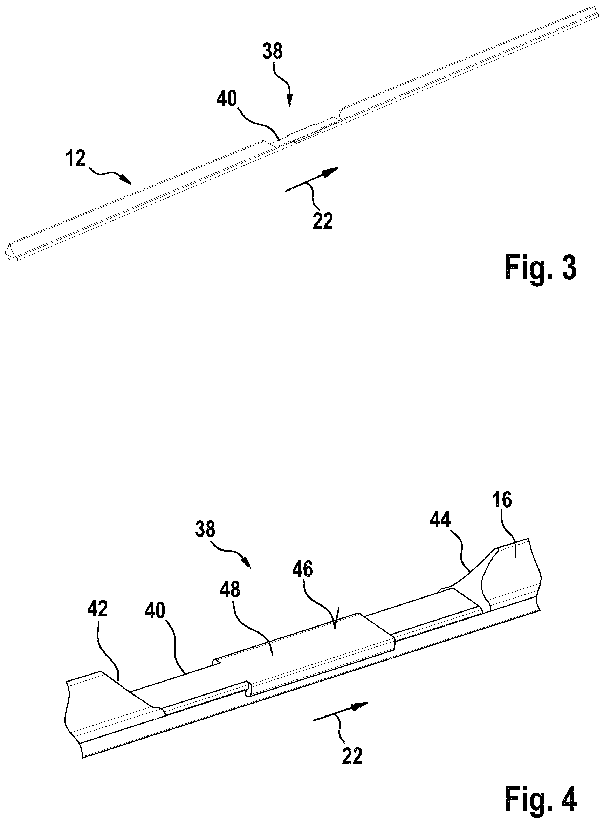

In Figur 3 ist eine erfindungsgemäße Wischleisteneinheit 12 dargestellt. In einem Wischblattadapteraufnahmebereich 38, der sich in Längsrichtung 22 betrachtet von 45% bis 55% der Längserstreckung der Wischleisteneinheit 12 erstreckt, weist das Windabweiserelement 16 eine Befestigungsausnehmung 40 auf. Das Windabweiserelement 16 ist an jedem freien Ende zur Wischlippe 18 hin abgerundet.

Im Wischleistenelement 14 verläuft in Längsrichtung 22 ein Längsführungskanal 24 für die Aufnahme eines federelastischen Trägerelements 20. Der Längsführungskanal 24 weist einen gleichen Querschnitt auf, wie das Trägerelement 20. Bei einem Einschieben des Trägerelements 20 in den Längsführungskanal 24 bildet sich ein Formschluss.

Figur 4 zeigt den Wischblattadapteraufnahmebereich 38 der Wischleisteneinheit 12 in einer perspektivischen Ansicht. Die Befestigungsausnehmung 40 grenzt an zwei Seitenwandungen 42, 44 des Windabweiserelements 16 an. Das Wischleistenelement 14 weist eine Auflagefläche 46 auf. Die Seitenwandungen 42, 44 schließen zur Längsrichtung 22 einen Winkel von 45° ein. Zueinander schließen die Seitenwandungen 42, 44 einen Winkel von 90° ein. Die Auflagefläche 46 befindet sich auf einem Auflagekörper 48, der zentral in der Befestigungsausnehmung 40 angeordnet ist.

An den Seitenwandungen 42, 44 ist der Längsführungskanal 24 der Wischleisteneinheit 12 geöffnet. Der Auflagekörper 48 setzt den Längsführungskanal 24 innerhalb des Wischblattadapteraufnahmebereichs 38 fort.

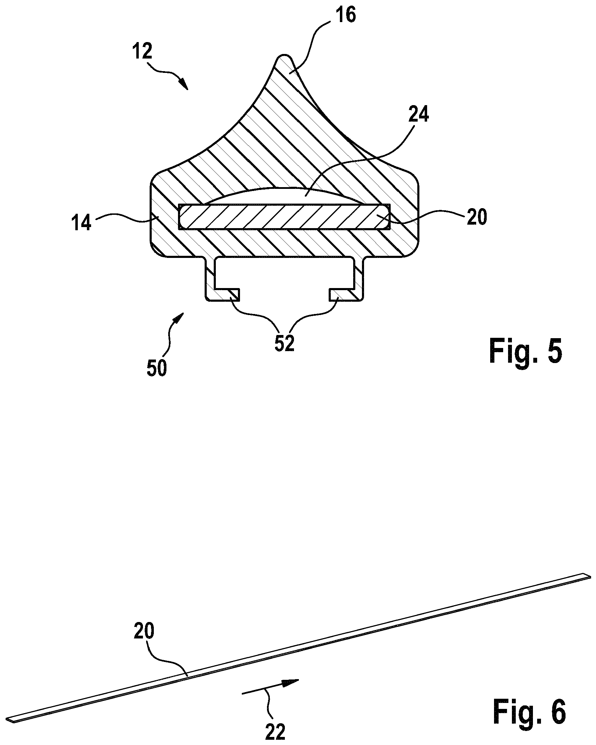

Figur 5 zeigt einen Schnitt durch die Wischleisteneinheit 12. Auf einer dem Windabweiserelement 16 gegenüberliegenden Seite ist eine Wischlippenführungseinheit 50 des Wischleistenelements 14 angeordnet, welches zwei L-förmige Führungsprofile 52 aufweist. Innerhalb der Wischlippenführungseinheit 50 ist in einem montierten Zustand ein Kopplungsbauteil der Wischlippe 18 angeordnet und bildet mit den Führungsprofilen 52 einen Formschluss.

In Figur 6 ist das federelastische Trägerelement 20 dargestellt, das aus einem Federstahl besteht. Das Trägerelement 20 weist eine Dicke auf, die einer Breite der Führungsnuten 36 entspricht.

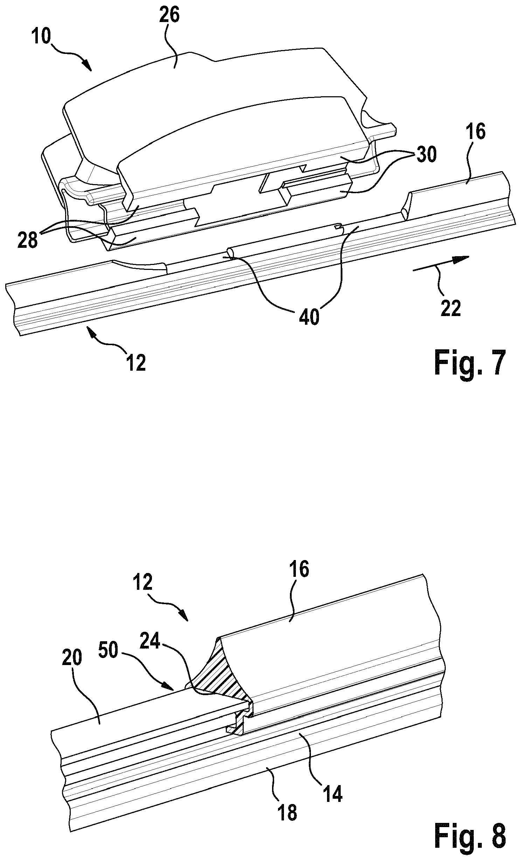

In Figur 7 ist ein erster Montageschritt der Wischblattvorrichtung dargestellt. Der Wischblattadapter 10 wird auf die Wischleisteneinheit 12 gesetzt. Dabei greifen die Befestigungsmittel 28, 30 des Wischblattadapters 10 formschlüssig in die Befestigungsausnehmung 40 der Wischleisteneinheit 12 ein. Der Wischblattadapter 10 liegt in einem montierten Zustand auf der Auflagefläche 46 auf. Der Wischblattadapter 10 bildet mit der Wischleisteneinheit 12 einen Formschluss. Eine Bewegung der Wischleisteneinheit 12 relativ zum Wischblattadapter 10 ist in Längsrichtung 22 vermieden.

In einem zweiten Montageschritt, wie in Figur 8 dargestellt, wird die Wischlippe 18 in die Wischlippenführungseinheit 50 eingeschoben und bildet mit diesem einen Formschluss. Dadurch bildet das Wischleistenelement 14 in einem montierten Zustand einen Formschluss mit der Wischlippe 18. Ferner wird das Trägerelement 20 in den Längsführungskanal 24 des Wischleistenelements 14 eingeführt. Dadurch bildet das Trägerelement 20 in einem montierten Zustand einen Formschluss mit dem Wischleistenelement 14.

Im Wischblattadapteraufnahmebereich 38 tritt das Trägerelement 20 aus dem Längsführungskanal 24 und wird anschließend in der Längsführungseinheit 34 des Wischblattadapters 10 geführt.

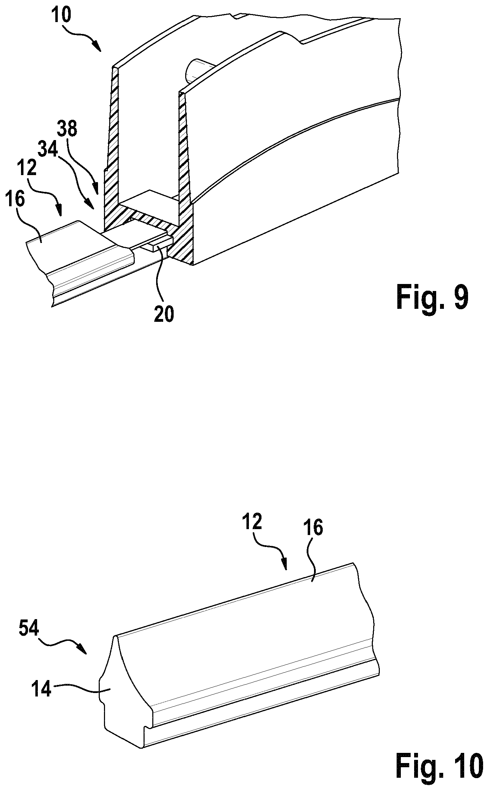

Figur 9 zeigt das Trägerelement 20, das komplett durch die Längsführungseinheit 34 geschoben ist. Das Trägerelement 20 bildet einen Formschluss mit dem Wischblattadapter 10. Der Wischblattadapter 10 ist fest mit der Wischleisteneinheit 12 verbunden.

Das Trägerelement 20 wird in einem dritten Montageschritt weiter geschoben, bis es sich vollständig in der Wischleisteneinheit 12 befindet. Um eine Bewegung des Trägerelements 20 relativ zur Wischleisteneinheit 12 zu vermeiden, wird das Wischleistenelement 14 in Endbereichen 54 der Längserstreckung der Wischleisteneinheit 12 verschmolzen, wie in einem vierten Montageschritt in Figur 10 dargestellt. Dadurch sind der Längsführungskanal 24 und die Wischlippenführungseinheit 50 in ihren zwei Endbereichen 54 stoffschlüssig verschlossen. Die Wischlippe 18 ist in Figur 10 aus Gründen der Übersichtlichkeit nicht dargestellt. Eine Bewegung des Trägerelements 20 innerhalb des Längsführungskanals 24 ist in jeglicher Richtung vermieden.

## Patentansprüche

1. Wischblattvorrichtung mit einer Wischleisteneinheit (12), die ein Windabweiserelement (16), eine Wischlippe (18) und ein Wischleistenelement (14) aufweist, das einen Längsführungskanal (24) für ein Trägerelement (20) umfasst, wobei das Wischleistenelement (14) in einem montierten Zustand einen Formschluss mit der Wischlippe bildet, und mit einem Wischblattadapter (10), der an der Wischleisteneinheit (12) befestigt ist, wobei das Wischleistenelement (14) eine Auflagefläche (46) aufweist, wobei sich die Auflagefläche (46) auf einem Auflagekörper (48) befindet, der zentral in einer Befestigungsausnehmung (40) angeordnet ist, wobei die Befestigungsausnehmung (40) an zwei Seitenwandungen (42, 44) des Windabweiserelements (16) angrenzt und wobei der Auflagekörper (48) den Längsführungskanal (24) innerhalb des Wischblattadapteraufnahmebereichs (38) so fortsetzt, dass ein Trägerelement (20) aus dem Längsführungskanal (24) austritt und anschließend in einer Längsführungseinheit (34) eines Wischblattadapters (10) geführt wird, wobei der Wischblattadapter (10) in einem montierten Zustand auf der Auflagefläche (46) aufliegt, **dadurch gekennzeichnet, dass** die Seitenwandungen (42,44) zur Längsrichtung (22) einen 45° Winkel einschließen.

2. Wischblattvorrichtung nach Anspruch 1, **dadurch gekennzeichnet, dass** das Wischleistenelement (14) einstückig mit dem Windabweiserelement (16) ausgebildet ist.

3. Wischblattvorrichtung nach Anspruch 1 oder 2, **dadurch gekennzeichnet, dass** die Wischleisteneinheit (12) ein federelastisches Trägerelement (20) umfasst, das in einem montierten Zustand einen Formschluss mit dem Wischleistenelement (14) bildet.

4. Wischblattvorrichtung nach einem der vorhergehenden Ansprüche, **dadurch gekennzeichnet, dass** der Wischblattadapter (10) in einem montierten Zustand einen Formschluss mit der Wischleisteneinheit (12) bildet.

5. Wischblattvorrichtung nach Anspruch 4, **dadurch gekennzeichnet, dass** der Wischblattadapter (10) eine Längsführungseinheit (34) aufweist, die dazu vorgesehen ist, das Trägerelement (20) formschlüssig aufzunehmen.

6. Wischblattvorrichtung nach einem der vorhergehenden Ansprüche, **dadurch gekennzeichnet, dass** der Längsführungskanal (24) in einem montierten Zustand in zumindest einem Endbereich (54) stoffschlüssig verschlossen ist.

7. Wischblattvorrichtung nach einem der vorhergehenden Ansprüche, **dadurch gekennzeichnet, dass** das Wischleistenelement (14) und das Windabweiserelement (16) in einem Coextrusions-Verfahren hergestellt sind.

8. Verfahren zur Montage einer Wischblattvorrichtung nach einem der Ansprüche 1 bis 7, wobei in einem ersten Montageschritt der Wischblattadapter (10) auf die Wischleisteneinheit (12) gesetzt wird, wobei Befestigungsmittel (28, 30) des Wischblattadapters (10) formschlüssig in eine Befestigungsausnehmung (40) der Wischleisteneinheit (12) eingreifen, wobei in einem zweiten Montageschritt die Wischlippe (18) in eine Wischlippenführungseinheit (50) der Wischblattvorrichtung eingeschoben wird und mit diesem einen Formschluss bildet, wobei die Wischlippe (18) und das Wischleistenelement (14) formschlüssig verbunden werden.

9. Verfahren nach Anspruch 8, **dadurch gekennzeichnet, dass** nachdem die Wischlippe (18) und das Wischleistenelement (14) formschlüssig verbunden sind, ein Trägerelement (20) in das Wischleistenelement (14) eingeschoben wird und einen Formschluss mit dem Wischblattadapter (10) bildet.

10. Verfahren nach Anspruch 9, **dadurch gekennzeichnet, dass** nach dem Einschieben des Trägerelements (20) in das Wischleistenelement (14), der Längsführungskanal (24) in zumindest einem Endbereich (54) stoffschlüssig verschlossen ist.

## Claims

1. Wiper blade device comprising a wiper strip unit (12) which has a wind deflector element (16), a wiper lip (18) and a wiper strip element (14) which comprises a longitudinal guide channel (24) for a support element (20), wherein, in a fitted state, the wiper strip element (14) forms an interlocking connection with the wiper lip, and comprising a wiper blade adapter (10), which is fastened to the wiper strip unit (12), wherein the wiper strip element (14) has a rest surface (46), wherein the rest surface (46) is located on a rest body (48), which is arranged centrally in a fastening recess (40), wherein the fastening recess (40) is adjacent to two side walls (42, 44) of the wind deflector element (16), and wherein the rest body (48) continues the longitudinal guide channel (24) within the wiper blade adapter receiving region (38) in such a manner that a support element (20) emerges out of the longitudinal guide channel (24) and is subsequently guided in a longitudinal guide unit (34) of a wiper blade adapter (10), wherein, in a fitted state, the wiper blade adapter (10) rests on the rest surface (46), **characterized in that** the side walls (42, 44) enclose a 45° angle with respect to the longitudinal direction (22) .

2. Wiper blade device according to Claim 1, **characterized in that** the wiper strip element (14) is formed integrally with the wind deflector element (16).

3. Wiper blade device according to Claim 1 or 2, **characterized in that** the wiper strip unit (12) comprises a spring-elastic support element (20) which, in a fitted state, forms an interlocking connection with the wiper strip element (14).

4. Wiper blade device according to one of the preceding claims, **characterized in that** the wiper blade adapter (10), in a fitted state, forms an interlocking connection with the wiper strip unit (12).

5. Wiper blade device according to Claim 4, **characterized in that** the wiper blade adaptor (10) has a longitudinal guide unit (34) which is provided for receiving the support element (20) in an interlocking manner.

6. Wiper blade device according to one of the preceding claims, **characterized in that,** in a fitted state, the longitudinal guide channel (24) is closed in an integrally bonded manner in at least one end region (54) .

7. Wiper blade device according to one of the preceding claims, **characterized in that** the wiper strip element (14) and the wind deflector element (16) are produced in a co-extrusion process.

8. Method for installing a wiper blade device according to one of Claims 1 to 7, wherein, in a first installation step, the wiper blade adapter (10) is placed onto the wiper strip unit (12), wherein fastening means (28, 30) of the wiper blade adapter (10) engage in an interlocking manner in a fastening recess (40) of the wiper strip unit (12), wherein, in a second installation step, the wiper lip (18) is pushed into a wiper lip guide unit (50) of the wiper blade device and forms an interlocking connection therewith, wherein the wiper lip (18) and the wiper strip element (14) are connected in an interlocking manner.

9. Method according to Claim 8, **characterized in that,** after the wiper lip (18) and the wiper strip element (14) are connected in an interlocking manner, a support element (20) is pushed into the wiper strip element (14) and forms an interlocking connection with the wiper blade adaptor (10).

10. Method according to Claim 9, **characterized in that,** after the support element (20) is pushed into the wiper strip element (14), the longitudinal guide channel (24) is closed in an integrally bonded manner in at least one end region (54).

## Revendications

1. Dispositif de balai d'essuie-glace comprenant une unité de raclette de balai d'essuie-glace (12) qui présente un élément déflecteur de vent (16), une lèvre de balai d'essuie-glace (18) et un élément de raclette de balai d'essuie-glace (14) qui comprend un canal de guidage longitudinal (24) pour un élément de support (20), l'élément de raclette de balai d'essuie-glace (14), dans un état monté, formant avec la lèvre de balai d'essuie-glace un engagement par correspondance de formes, et comprenant un adaptateur de balai d'essuie-glace (10) qui est fixé à l'unité de raclette de balai d'essuie-glace (12), l'élément de raclette de balai d'essuie-glace (14) présentant une surface d'appui (46), la surface d'appui (46) se trouvant sur un corps d'appui (48) qui est disposé centralement dans un évidement de fixation (40), l'évidement de fixation (40) étant adjacent à deux parois latérales (42, 44) de l'élément déflecteur de vent (16) et le corps d'appui (48) prolongeant le canal de guidage longitudinal (24) à l'intérieur de la région de réception d'adaptateur de balai d'essuie-glace (38) de telle sorte qu'un élément de support (20) sorte du canal de guidage longitudinal (24) et soit ensuite guidé dans une unité de guidage longitudinal (34) d'un adaptateur de balai d'essuie-glace (10), l'adaptateur de balai d'essuie-glace (10), dans un état monté, reposant sur la surface d'appui (46), **caractérisé en ce que** les parois latérales (42, 44) forment avec la direction longitudinale (22) un angle de 45°.

2. Dispositif de balai d'essuie-glace selon la revendication 1, **caractérisé en ce que** l'élément de raclette de balai d'essuie-glace (14) est réalisé d'une seule pièce avec l'élément déflecteur de vent (16).

3. Dispositif de balai d'essuie-glace selon la revendication 1 ou 2, **caractérisé en ce que** l'unité de raclette de balai d'essuie-glace (12) comprend un élément de support élastique à ressort (20) qui forme, dans un état monté, un engagement par correspondance de formes avec l'élément de raclette de balai d'essuie-glace (14).

4. Dispositif de balai d'essuie-glace selon l'une quelconque des revendications précédentes, **caractérisé en ce que** l'adaptateur de balai d'essuie-glace (10), dans un état monté, forme un engagement par correspondance de formes avec l'unité de raclette de balai d'essuie-glace (12).

5. Dispositif de balai d'essuie-glace selon la revendication 4, **caractérisé en ce que** l'adaptateur de balai d'essuie-glace (10) présente une unité de guidage longitudinal (34) qui est prévue pour recevoir l'élément de support (20) par engagement par correspondance de formes.

6. Dispositif de balai d'essuie-glace selon l'une quelconque des revendications précédentes, **caractérisé en ce que** le canal de guidage longitudinal (24), dans un état monté, est fermé par engagement par liaison de matière dans au moins une région d'extrémité (54).

7. Dispositif de balai d'essuie-glace selon l'une quelconque des revendications précédentes, **caractérisé en ce que** l'élément de raclette de balai d'essuie-glace (14) et l'élément déflecteur de vent (16) sont fabriqués par un procédé de coextrusion.

8. Procédé de montage d'un dispositif de balai d'essuie-glace selon l'une quelconque des revendications 1 à 7, dans lequel, dans une première étape de montage, l'adaptateur de balai d'essuie-glace (10) est placé sur l'unité de raclette de balai d'essuie-glace (12), des moyens de fixation (28, 30) de l'adaptateur de balai d'essuie-glace (10) s'engageant par correspondance de formes dans un évidement de fixation (40) de l'unité de raclette de balai d'essuie-glace (12), et dans une deuxième étape de montage, la lèvre de balai d'essuie-glace (18) étant enfoncée dans une unité de guidage de lèvre de balai d'essuie-glace (50) du dispositif de balai d'essuie-glace et formant avec celle-ci un engagement par correspondance de formes, la lèvre de balai d'essuie-glace (18) et l'élément de raclette de balai d'essuie-glace (14) étant connectés par engagement par correspondance de formes.

9. Procédé selon la revendication 8, **caractérisé en ce qu'**après que la lèvre de balai d'essuie-glace (18) et l'élément de raclette de balai d'essuie-glace (14) ont été connectés par engagement par correspondance de formes, un élément de support (20) est enfoncé dans l'élément de raclette de balai d'essuie-glace (14), et forme un engagement par correspondance de formes avec l'adaptateur de balai d'essuie-glace (10).

10. Procédé selon la revendication 9, **caractérisé en ce qu'**après l'enfoncement de l'élément de support (20) dans l'élément de raclette de balai d'essuie-glace (14), le canal de guidage longitudinal (24) est fermé par engagement de liaison de matière dans au moins une région d'extrémité (54).
